# EUROPEAN PATENT APPLICATION

(11) **EP 4 383 905 A1**
(43) Date of publication of application: **12.06.2024**
(21) Application number: 22852065.6
(22) Date of filing: 29.07.2022
(51) Int. Cl.: H04W 72/12

(54) **DOWNLINK CONTROL INFORMATION INDICATION METHOD, AND UPLINK CHANNEL TRANSMISSION RANK DETERMINATION METHOD AND APPARATUS**

(30) Priority: 04.08.2021 CN 202110893416
(71) Applicant: Vivo Mobile Communication Co., Ltd., Dongguan, Guangdong 523863 (CN)
(72) Inventor: SUN, Rongrong, Dongguan, Guangdong 523863 (CN); LIU, Hao, Dongguan, Guangdong 523863 (CN); SONG, Yang, Dongguan, Guangdong 523863 (CN); TAMRAKAR, Rakesh, Dongguan, Guangdong 523863 (CN)
(74) Representative: Lavoix
(86) International application number: PCT/CN2022/109020
(87) International publication number: WO 2023/011352

(57) **Abstract**

This application discloses a method for indicating downlink control information, a method for determining an uplink channel transmission rank, and apparatuses. The method for indicating downlink control information includes: receiving, by a terminal, DCI for scheduling a PUSCH; and determining, by the terminal based on maximum transmission rank information for the PUSCH, a bit length of a target field of the DCI and significant bits in the target field, where the target field includes at least one of the following: at least one SRI field; at least one TPMI field; and a PTRS-DMRS field. The method for determining an uplink channel transmission rank includes: determining, by a terminal, maximum transmission rank information for a PUSCH, where the maximum transmission rank information for the PUSCH includes: maximum transmission rank information for a PUSCH associated only with a single SRS resource set configured for the terminal; and maximum transmission rank information for a PUSCH associated simultaneously with multiple SRS resource sets configured for the terminal.

## Description

### CROSS-REFERENCE TO RELATED APPLICATIONS

This application claims priority to Chinese Patent Application No. 202110893416.0, filed in China on August 04, 2021, which is incorporated herein by reference in its entirety.

### TECHNICAL FIELD

This application pertains to the field of wireless communications technologies, and specifically relates to a method for indicating downlink control information, a method for determining an uplink channel transmission rank, and apparatuses.

### BACKGROUND

In order to improve the reliability of uplink data transmission, Rel-17 introduced a physical uplink shared channel (Physical Uplink Shared Channel, PUSCH) transmission method using multiple transmission reception points (Transmitting Receiving Point, TRP). This means that different repetitions of a PUSCH can be transmitted to multiple TRPs using different beams, in order to mitigate the impact of link blockage and beam occlusion.

Currently, in multi-TRP scenarios, it has been determined to configure two sounding reference signal (Sounding Reference Signal, SRS) resource sets for a terminal, corresponding to two TRPs respectively. Downlink control information (Downlink Control Information, DCI) for scheduling a PUSCH includes two SRS resource indicator (SRS resource indicator, SRI) fields and two transmitted precoding matrix indicator (Transmitted Precoding Matrix Indicator, TPMI) fields that are used to indicate two sets of parameters respectively and are used for PUSCH transmission. The two SRI fields correspondingly indicate SRS resources in the two SRS resource sets, with each SRS resource corresponding to one beam. This allows the PUSCH to be transmitted using two beams simultaneously, improving the reliability of data transmission. However, there is currently no definitive conclusion on how to interpret the DCI for scheduling the PUSCH in the aforementioned multi-TRP scenarios.

Furthermore, to ensure that the receive end can combine different repetition transmissions of a PUSCH to improve the reliability of data transmission, it is required that the repetitions transmitted to multiple TRPs correspond to a same transmission rank (also referred to as number of transmission layers). In addition, new fields have been introduced to dynamically indicate the switching between single-TRP transmission and multi-TRP transmission. Currently, maximum transmission rank information is configured by radio resource control (Radio Resource Control, RRC) signaling. Once the maximum transmission rank information is configured, the maximum transmission rank of PUSCH sent to two TRPs is limited by the configuration. When the two TRPs have different capabilities, for example, one TRP supports 4 layers of data transmission for the terminal while the other TRP only supports 2 layers of data transmission, the network side chooses to configure the maximum transmission rank as 2 layers. This means that even if the downlink control information (Downlink Control Information, DCI) indicates a switch to single-TRP transmission, for example, switching to the TRP that supports 4 layers of data transmission, it is not possible to achieve a scheduling with a maximum transmission rank greater than 2 layers in this case. Therefore, existing technologies limit the throughput performance during single-TRP transmission.

### SUMMARY

Embodiments of this application provide a method for indicating downlink control information, a method for determining an uplink channel transmission rank, and apparatuses, so as to solve the problem of how to interpret DCI for scheduling a PUSCH in multi-TRP scenarios, or so as to solve the problem of limited throughput performance during single-TRP transmission in multi-TRP scenarios.

According to a first aspect, a method for indicating downlink control information is provided, including:
receiving, by a terminal, DCI for scheduling a PUSCH; and
determining, by the terminal based on maximum transmission rank information for the PUSCH, a bit length of a target field of the DCI and significant bits in the target field, where the target field includes at least one of the following:
   at least one SRI field;
   at least one TPMI field; and
   a PTRS-DMRS field.

According to a second aspect, a method for determining an uplink channel transmission rank is provided, including:
determining, by a terminal, maximum transmission rank information for a PUSCH, where the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

According to a third aspect, an apparatus for interpreting downlink control information is provided, including:
a first receiving module configured to receive DCI for scheduling a PUSCH; and
a first determining module configured to determine, based on maximum transmission rank information for the PUSCH, a bit length of a target field of the DCI and significant bits in the target field, where the target field includes at least one of the following:
   at least one SRI field;
   at least one TPMI field; and
   a PTRS-DMRS field.

According to a fourth aspect, an apparatus for determining an uplink channel transmission rank is provided, including:
a determining module configured to determine maximum transmission rank information for a PUSCH, where the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

According to a fifth aspect, a terminal is provided, including a processor, a memory, and a program or instructions stored in the memory and capable of running on the processor, and when the program or instructions are executed by the processor, the steps of the method according to the first aspect or the second aspect are implemented.

According to a sixth aspect, a terminal is provided, including a processor and a communications interface, where the communications interface is configured to receive DCI for scheduling a PUSCH, and the processor is further configured to determine, based on maximum transmission rank information for the PUSCH, a bit length of a target field of the DCI and significant bits in the target field, where the target field includes at least one of the following:
at least one SRI field;
at least one TPMI field; and
a PTRS-DMRS field.

According to a seventh aspect, a terminal is provided, including a processor and a communications interface, where the processor is configured to determine maximum transmission rank information for a PUSCH, and the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

According to an eighth aspect, a readable storage medium is provided, where a program or instructions are stored in the readable storage medium, and when the program or instructions are executed by a processor, the steps of the method according to the first aspect are implemented, or the steps of the method according to the second aspect are implemented.

According to a ninth aspect, a chip is provided, where the chip includes a processor and a communications interface, the communications interface is coupled to the processor, and the processor is configured to run a program or instructions to implement the steps of the method according to the first aspect or the steps of the method according to the second aspect.

According to a tenth aspect, a computer program or program product is provided. The computer program or program product is stored in a storage medium. The program or program product is executed by at least one processor to implement the steps of the method according to the first aspect or the second aspect.

In the embodiments of this application, it is specified that the terminal determines, based on maximum transmission rank information for a PUSCH, a bit length of a target field of DCI for scheduling the PUSCH and significant bits in the target field, so that the terminal can correctly interpret the target field of the DCI and carry out correct PUSCH transmission.

In the embodiments of this application, in multi-TRP scenarios, different maximum transmission ranks are configured for different TRPs, which ensures that when transitioning to single-TRP transmission, the terminal can transmit a greater number of layers based on the current TRP configuration, thereby achieving better throughput performance.

### BRIEF DESCRIPTION OF DRAWINGS

FIG. 1 is a block diagram of a wireless communications system to which embodiments of this application are applicable;
FIG. 2 is a schematic diagram indicating parameters for multi-TRP PUSCH transmission;
FIG. 3 is a schematic flowchart of a method for indicating downlink control information according to an embodiment of this application;
FIG. 4 is a schematic flowchart of a method for determining an uplink channel transmission rank according to an embodiment of this application;
FIG. 5 is a schematic structural diagram of an apparatus for interpreting downlink control information according to an embodiment of this application;
FIG. 6 is a schematic structural diagram of an apparatus for determining an uplink channel transmission rank according to an embodiment of this application;
FIG. 7 is a schematic structural diagram of a terminal according to an embodiment of this application; and
FIG. 8 is a schematic diagram of a hardware structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates an "or" relationship between the associated objects.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, such as a sixth generation (6th Generation, 6G) communication system.

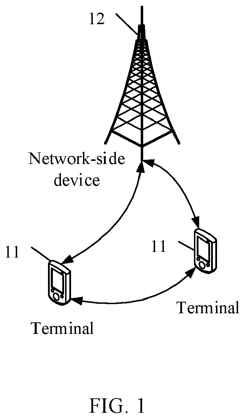

FIG. 1 is a block diagram of a wireless communications system to which the embodiments of this application are applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), or smart home (home appliances or furniture with wireless communications functions, such as refrigerators, televisions, washing machines, or furniture). The wearable device includes a smart watch, a smart band, a smart headphone, smart glasses, smart jewelry (smart bangle, smart bracelet, smart ring, smart necklace, smart anklet, smart ankle bracelet, and the like), a smart wristband, smart clothing, a gaming console, and the like. It should be noted that a specific type of the terminal 11 is not limited in this embodiment of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (Evolved Node B, eNB), a home NodeB, a home evolved NodeB, a wireless local area network (wireless local area network, WLAN) access point, a WiFi node, a transmission reception point (Transmitting Receiving Point, TRP), or some other appropriate terms in the art. The base station is not limited to a specific technical term as long as the same technical effect is achieved. It should be noted that the base station in the NR system is taken merely as an example in this embodiment of this application, but the base station is not limited to any specific type.

The following describes in detail a method for indicating downlink control information, a method for determining an uplink channel transmission rank, and apparatuses in the embodiments of this application by using some embodiments and application scenarios thereof with reference to the accompanying drawings.

The following first describes some communications terms related to this application.

### 1. Codebook based PUSCH transmission scheme

SRS resource sets for codebook transmission are configured by a network side for user equipment (User Equipment, UE, also known as terminal). Each resource set contains at least one SRS resource. UE uses at least one configured SRS resource to transmit SRS, and the network side receives the SRS to obtain an uplink channel. Based on this, the network side determines the beam, precoding matrix, modulation and coding scheme (Modulation and coding scheme, MCS), and the like for transmission of UE uplink data bearer channel PUSCH and notifies the UE of them through downlink control information (Downlink Control Information, DCI).

The UE receives the DCI for scheduling a PUSCH, and a precoding matrix for transmission of the scheduled PUSCH in a TPMI field of the DCI is selected from a predefined codebook, with indication examples shown in Table 1. The UE will map uplink data precoded according to the indicated TPMI onto PUSCH resources for transmission.

**Table 1 Precoding information and number of layers, for 4 antenna ports, if transform precoder is disabled, maximum rank (maxRank) = 2 or 3 or 4**

| Bit field mapped to index | codebookSubset = fullyAndPartialAndNonCoherent | Bit field mapped to index | codebookSubset = partialAndNonCoherent | Bit field mapped to index | codebookSubset = nonCoherent |
|---|---|---|---|---|---|
| 0 | 1 layer: TPMI=0 | 0 | 1 layer: TPMI = 0 | 0 | 1 layer: TPMI = 0 |
| 1 | 1 layer: TPMI = 1 | 1 | 1 layer: TPMI = 1 | 1 | 1 layer: TPMI = 1 |
| ... | ... | ... | ... | ... | ... |
| 3 | 1 layer: TPMI = 3 | 3 | 1 layer: TPMI = 3 | 3 | 1 layer: TPMI = 3 |
| 4 | 2 layers: TPMI = 0 | 4 | 2 layers: TPMI = 0 | 4 | 2 layers: TPMI = 0 |
| ... | ... | ... | ... | ... | ... |
| 9 | 2 layers: TPMI = 5 | 9 | 2 layers: TPMI = 5 | 9 | 2 layers: TPMI = 5 |
| 10 | 3 layers: TPMI = 0 | 10 | 3 layers: TPMI = 0 | 10 | 3 layers: TPMI = 0 |
| 11 | 4 layers: TPMI = 0 | 11 | 4 layers: TPMI = 0 | 11 | 4 layers: TPMI = 0 |
| 12 | 1 layer: TPMI = 4 | 12 | 1 layer: TPMI = 4 | 12-15 | reserved |
| ... | ... | ... | ... | | |
| 19 | 1 layer: TPMI = 11 | 19 | 1 layer: TPMI = 11 | | |
| 20 | 2 layers: TPMI = 6 | 20 | 2 layers: TPMI = 6 | | |
| ... | ... | ... | ... | | |
| 27 | 2 layers: TPMI = 13 | 27 | 2 layers: TPMI = 13 | | |
| 28 | 3 layers: TPMI = 1 | 28 | 3 layers: TPMI = 1 | | |
| 29 | 3 layers: TPMI = 2 | 29 | 3 layers: TPMI = 2 | | |
| 30 | 4 layers: TPMI = 1 | 30 | 4 layers: TPMI = 1 | | |
| 31 | 4 layers: TPMI = 2 | 31 | 4 layers: TPMI = 2 | | |
| 32 | 1 layer: TPMI = 12 | | | | |
| ... | ... | | | | |
| 47 | 1 layer: TPMI = 27 | | | | |
| 48 | 2 layers: TPMI = 14 | | | | |
| ... | ... | | | | |
| 55 | 2 layers: TPMI = 21 | | | | |
| 56 | 3 layers: TPMI = 3 | | | | |
| ... | ... | | | | |
| 59 | 3 layers: TPMI = 6 | | | | |
| 60 | 4 layers: TPMI = 3 | | | | |
| 61 | 4 layers: TPMI = 4 | | | | |
| 62-63 | reserved (reserved) | | | | |

### 2. Non-codebook based PUSCH transmission scheme

The network side configures SRS resource sets for non-codebook transmission for UE, with each resource set containing at least one SRS resource. First, the UE detects an NZP CSI-RS sent by the network side on non-zero power channel state information reference signal (Non-Zero Power Channel State Information Reference Signal, NZP CSI-RS) resources configured by the network side to obtain downlink channel state information. Based on channel reciprocity, the downlink channel information can be approximately equivalent to uplink channel information. The UE calculates a candidate precoding matrix for uplink transmission based on the uplink channel information, precodes an SRS, and sends the precoded SRS. The network side measures the precoded SRS to further determine the precoding matrix for PUSCH transmission, and notifies the UE of the precoding matrix through DCI for scheduling a PUSCH.

A SRI field of the DCI selects a subset of SRS resource indexes, that is, a SRI group, from a predefined SRI index table, to notify the UE of the precoding matrix for PUSCH precoding, with indication examples shown in Table 2.

**Table 2 SRI indicators for non-codebook based PUSCH transmission, Lₘₐₓ = 4**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0, 1 | 2 | 2 | 2 | 2 |
| 3 | reserved | 3 | 0, 1 | 3 | 3 |
| | | 4 | 0, 2 | 4 | 0, 1 |
| | | 5 | 1, 2 | 5 | 0, 2 |
| | | 6 | 0, 1,2 | 6 | 0, 3 |
| | | 7 | reserved | 7 | 1, 2 |
| | | | | 8 | 1, 3 |
| | | | | 9 | 2, 3 |
| | | | | 10 | 0, 1, 2 |
| | | | | 11 | 0, 1, 3 |
| | | | | 12 | 0, 2, 3 |
| | | | | 13 | 1, 2, 3 |
| | | | | 14 | 0, 1, 2, 3 |
| | | | | 15 | reserved |

### 3. Indication of parameters for multi-TRP PUSCH transmission

Currently, in multi-TRP scenarios, it has been determined to configure two SRS resource sets for a terminal, corresponding to two TRPs respectively. DCI for scheduling a PUSCH includes two SRI fields and two TPMI fields that are used to indicate two sets of parameters respectively and are used for PUSCH transmission. The two SRI fields correspondingly indicate SRS resources in the two SRS resource sets, with each SRS resource corresponding to one beam. This allows the PUSCH to be transmitted using two beams simultaneously, improving the reliability of data transmission.

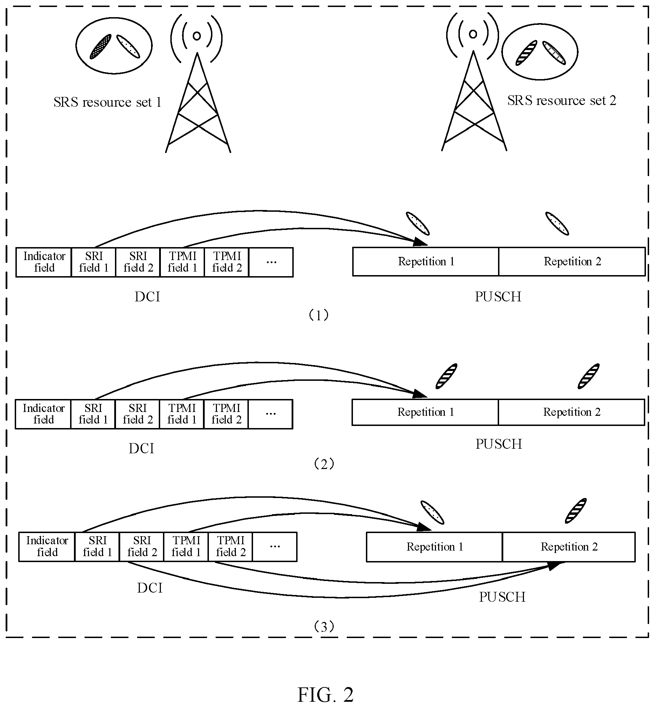

In addition, to improve the flexibility of multi-TRP transmission, an indicator field is introduced in the DCI to indicate which one of the two current TRPs is a target TRP or which two TRPs are target TRPs for PUSCH transmission. For specific indications, refer to FIG. 2.
(1) When the indicator field takes "00": Only SRI field 1 and TPMI field 1 are used, and SRI field 1 corresponds to SRS resource set 1, which means that two repetitions (repetition 1 and repetition 2) are sent to TRP1.
(2) When the indicator field takes "01": Only SRI field 1 and TPMI field 1 are used, and SRI field 1 corresponds to SRS resource set 2, which means that two repetitions (repetition 1 and repetition 2) are sent to TRP2.
(3) When the indicator field takes "10": SRI field 1 and TPMI field 1 correspond to SRS resource set 1, and SRI field 2 and TPMI field 2 correspond to SRS resource set 2, which means that repetition 1 is sent to TRP1 and repetition 2 is sent to TRP2.

It can be seen from the foregoing content that when TRP1 is used as the target TRP for PUSCH transmission, SRI field 1 and TPMI field 1 are used to indicate information of the PUSCH associated with TRP1; and when TRP2 is used as the target TRP for PUSCH transmission, SRI field 1 and TPMI field 1 are also used to indicate information of the PUSCH associated with TRP2. When SRI field 1 and TPMI field 1 are used to indicate information of the PUSCH associated with TRP2, how the terminal reads SRI field 1 and TPMI field 1 is an urgent problem to be solved.

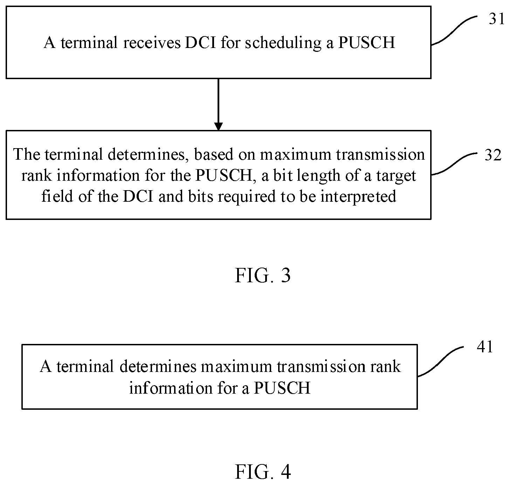

Referring to FIG. 3, an embodiment of this application provides a method for indicating downlink control information, including:
Step 31: A terminal receives DCI for scheduling a PUSCH; and
Step 32: The terminal determines, based on maximum transmission rank information for the PUSCH, a bit length of a target field of the DCI and significant bits in the target field, where the target field includes at least one of the following:
   at least one SRI field;
   at least one TPMI field; and
   a phase-tracking reference signal-demodulation reference signal (Phase-tracking reference signal - Demodulation Reference Signal, PTRS-DMRS) field.

In this embodiment of this application, it is specified that the terminal determines, based on maximum transmission rank information for a PUSCH, a bit length of a target field of DCI for scheduling the PUSCH and significant bits in the target field, so that the terminal can correctly interpret the target field of the DCI and carry out correct PUSCH transmission.

### 1. SRS resource set for codebook transmission

In some embodiments of this application, optionally, the DCI includes N TMPI fields, where the N TMPI fields are in one-to-one association with N SRS resource sets for codebook transmission corresponding to the terminal, and N is an integer greater than or equal to 2. The determining, by the terminal based on maximum transmission rank information for the PUSCH, a bit length of a target field of the DCI and significant bits in the target field includes: determining, by the terminal based on the maximum transmission rank information for the PUSCH, bit lengths of the N TPMI fields and significant bits in the target field.

For example, in some embodiments of this application, the DCI includes two TMPI fields, the two TMPI fields being in one-to-one association with two SRS resource sets for codebook transmission configured for the terminal. The terminal determines, based on the maximum transmission rank information for the PUSCH, bit lengths of the two TPMI fields and significant bits in the target field.

### (1) Method for determining a bit length of a TPMI field

Optionally, a bit length of a first TPMI field associated with a first SRS resource set is determined based on the following two factors: a maximum number of SRS ports of the first SRS resource set and first transmission rank information, where the first transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a TPMI field associated with a second SRS resource set is determined based on the following two factors: a maximum number of SRS ports of the second SRS resource set and first information, the second SRS resource set being an SRS resource set in the N SRS resource sets other than the first SRS resource set; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated simultaneously with the N SRS resource sets.

For example, in some embodiments of this application, optionally, the DCI includes two TMPI fields, the two TMPI fields being in one-to-one association with two SRS resource sets for codebook transmission configured for the terminal, and a bit length of a first TPMI field associated with a first SRS resource set is determined based on the following two factors: a maximum number of SRS ports of the first SRS resource set and the maximum transmission rank information for the PUSCH associated only with the first SRS resource set;
a bit length of a second TPMI field associated with a second SRS resource set is determined based on the following two factors: a maximum number of SRS ports of the second SRS resource set and first information; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated with both the first SRS resource set and the second SRS resource set.

### (2) Method for determining significant bits in a TPMI field as the target field

(21) In some embodiments of this application, optionally, the determining, by the terminal based on the maximum transmission rank information for the PUSCH, bit lengths of the N TPMI fields and significant bits in the target field includes:
when the DCI indicates that a first TPMI field is used to indicate a precoding matrix for transmission of a first PUSCH resource, determining that X bits of the least significant bits (Least Significant Bit, LSB) in the first TPMI field are significant bits, or that the most significant X1 bits (Most Significant Bit, MSB) in the first TPMI field are zeros; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
X or X1 is determined based on the number of SRS ports of the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

For example, the DCI includes two TMPI fields, the two TMPI fields being in one-to-one association with two SRS resource sets for codebook transmission configured for the terminal. When the DCI indicates that a first TPMI field is used to indicate a precoding matrix for transmission of a first PUSCH resource, X bits of the least significant bits in the first TPMI field are determined as significant bits, or the most significant X1 bits in the first TPMI field are determined as zeros; where
the first PUSCH resource is associated with a PUSCH transmission occasion of an SRS resource in a second SRS resource set; and
X or X1 is determined based on the number of SRS ports of the second SRS resource set and the maximum transmission rank information for the PUSCH associated only with the second SRS resource set.

(22) In some embodiments of this application, optionally, the determining, by the terminal based on the maximum transmission rank information for the PUSCH, bit lengths of the N TPMI fields and significant bits in the target field includes:
when the DCI indicates that a first TPMI field is used to indicate a precoding matrix for transmission of a first PUSCH resource, determining that first Y codepoints of the first TPMI field are significant bits and the remaining codepoints are reserved; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
Y is determined based on the number of SRS ports of the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

For example, the DCI includes two TMPI fields, the two TMPI fields being in one-to-one association with two SRS resource sets for codebook transmission configured for the terminal. When the DCI indicates that a first TPMI field is used to indicate a precoding matrix for transmission of a first PUSCH resource, the first Y codepoint of the first TPMI field are determined as significant bits, or the remaining codepoints are reserved; where
the first PUSCH resource is associated with a PUSCH transmission occasion of an SRS resource in a second SRS resource set; and
Y is determined based on a maximum number of SRS ports of the second SRS resource set and the maximum transmission rank information for the PUSCH associated only with the second SRS resource set.

### 2. SRS resource set for non-codebook transmission

In some embodiments of this application, optionally, the DCI includes N SRI fields, where the N SRI fields are in one-to-one association with N SRS resource sets for non-codebook transmission corresponding to the terminal, and N is an integer greater than or equal to 2. The determining, by the terminal based on maximum transmission rank information for the PUSCH, a bit length of a target field of the DCI and significant bits in the target field includes: determining, by the terminal based on the maximum transmission rank information for the PUSCH, bit lengths of the N SRI fields and significant bits in the target field.

For example, the DCI includes two SRI fields, the two SRI fields being in one-to-one association with two SRS resource sets for non-codebook transmission configured for the terminal. The terminal determines, based on the maximum transmission rank information for the PUSCH, bit lengths of the two SRI fields and significant bits in the target field.

### (1) Method for determining a bit length of a SRI field

Optionally, a bit length of a first SRI field associated with a first SRS resource set is determined based on the following two factors: a number of SRS resources in the first SRS resource set and second transmission rank information, where the second transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a SRI field associated with a second SRS resource set is determined based on the following two factors: a number of SRS resources in the second SRS resource set and first information, the second SRS resource set being an SRS resource set in the N SRS resource sets other than the first SRS resource set; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated simultaneously with the N SRS resource sets.

For example, the DCI includes two SRI fields, the two SRI fields being in one-to-one association with two SRS resource sets for non-codebook transmission configured for the terminal. A bit length of a first SRI field associated with a first SRS resource set is determined based on the following two factors: a number of SRS resources in the first SRS resource set and the maximum transmission rank information for the PUSCH associated only with the first SRS resource set.

A bit length of a second SRI field associated with a second SRS resource set is determined based on the following two factors: a number of SRS resources in the second SRS resource set and first information; where
the first information includes at least one of the following:
the maximum transmission rank information for the PUSCH associated only with the first SRS resource set;
maximum transmission rank information for a PUSCH associated only with the second SRS resource set; and
maximum transmission rank information for a PUSCH associated with both the first SRS resource set and the second SRS resource set.

### (2) Method for determining significant bits in a SRI field as the target field

(21) Optionally, the determining, by the terminal based on the maximum transmission rank information for the PUSCH, bit lengths of the N SRI fields and significant bits in the target field includes:
when the DCI indicates that a first SRI field is used to indicate an SRS resource group for transmission of a first PUSCH resource, determining that W bits of the least significant bits in the first SRI field are significant bits, or that the most significant W1 bits in the first SRI field are zeros and the remaining bits are significant bits; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
W or W1 is determined based on the number of SRS resources in the second SRS resource set and/or second information. Optionally, the second information includes at least one of the following: maximum transmission rank information for a PUSCH associated only with the second SRS resource set, maximum transmission rank information supported by the terminal, and maximum transmission rank configured by the network side.

For example, the DCI includes two SRI fields, the two SRI fields being in one-to-one association with two SRS resource sets for non-codebook transmission configured for the terminal. When the DCI indicates that a first SRI field is used to indicate an SRS resource group for transmission of a first PUSCH resource, W bits of the least significant bits in the first SRI field are determined as significant bits, or the most significant W1 bits in the first SRI field are determined as zeros; where the first PUSCH resource is associated with a PUSCH transmission occasion of an SRS resource in a second SRS resource set; and W or W1 is determined based on the number of SRS resources in the second SRS resource set and the maximum transmission rank information for the PUSCH associated only with the second SRS resource set.

(22) Optionally, the determining, by the terminal based on the maximum transmission rank information for the PUSCH, bit lengths of the N SRI fields and significant bits in the target field includes:
when the DCI indicates that a first SRI field is used to indicate an SRS resource for transmission of a first PUSCH resource, determining that first Z codepoints of the first SRI field are significant bits and the remaining codepoints are reserved; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
Z is determined based on the number of SRS resources in the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

For example, the DCI includes two SRI fields, the two SRI fields being in one-to-one association with two SRS resource sets for non-codebook transmission configured for the terminal. When the DCI indicates that a first SRI field is used to indicate an SRS resource for transmission of a first PUSCH resource, first Z codepoints of the first SRI field are determined as significant bits and the remaining codepoints are determined as reserved; where the first PUSCH resource is associated with a PUSCH transmission occasion of an SRS resource in a second SRS resource set; and Z is determined based on the number of SRS resources in the second SRS resource set and the maximum transmission rank information for the PUSCH associated only with the second SRS resource set.

In this embodiment of this application, optionally, the terminal is configured with N SRS resource sets, N being an integer greater than or equal to 2; and the determining, by the terminal based on maximum transmission rank information for the PUSCH, a bit length of a target field of the DCI and significant bits in the target field includes:
in a case that the maximum transmission rank information for each PUSCH associated with the SRS resource set is 1, determining, by the terminal, that the PTRS-DMRS field of the DCI is 0 bits, or otherwise, 2 bits. In the foregoing embodiment, the maximum transmission rank information for the PUSCH determined by the terminal may be one or multiple pieces. Cases with multiple pieces correspond to multi-TRP scenarios.

The following describes how to determine maximum transmission rank information for a PUSCH.

In this embodiment of this application, optionally, the maximum transmission rank information for the PUSCH includes: maximum transmission rank information for the PUSCH associated only with a single SRS resource set configured for the terminal; and maximum transmission rank information for the PUSCH associated simultaneously with multiple SRS resource sets configured for the terminal.

For example, if two SRS resource sets are configured for the terminal, the maximum transmission rank information for the PUSCH determined by the terminal includes:
the maximum transmission rank information for the PUSCH associated only with the first SRS resource set;
maximum transmission rank information for a PUSCH associated only with the second SRS resource set; and
maximum transmission rank information for a PUSCH associated with both the first SRS resource set and the second SRS resource set.

In this embodiment of this application, optionally, before the determining, by a terminal, the maximum transmission rank information for the PUSCH, the method further includes: receiving, by the terminal, configuration information of N SRS resource sets sent by a network-side device, where the SRS resource sets are SRS resource sets for codebook transmission or SRS resource sets for non-codebook transmission.

### 1. The SRS resource set is an SRS resource set for codebook transmission

(1) In some embodiments of this application, optionally, before the determining, by a terminal, the maximum transmission rank information for the PUSCH, the method further includes: receiving, by the terminal, first configuration information sent by a network-side device, the first configuration information including N pieces of maximum transmission rank information, where the N pieces of maximum transmission rank information are in one-to-one association with the N SRS resource sets, and N is an integer greater than or equal to 2.

The determining, by a terminal, maximum transmission rank information for a PUSCH includes:
determining that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
determining that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

To be specific, M SRS resource sets can be selected from the N SRS resources set for simultaneous PUSCH transmission, and M may be less than N or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

For example, the network-side device configures two pieces of maximum transmission rank information, m1 and m2, the two pieces of maximum transmission rank information being in one-to-one association with two SRS resource sets configured for the terminal. The identifier of the first SRS resource set is smaller than the identifier of the second SRS resource set, and the maximum transmission rank m1 associated with the first SRS resource set is greater than or equal to the maximum transmission rank m2 associated with the second SRS resource set.

The maximum transmission rank information for the PUSCH determined by the terminal includes:
determining the maximum transmission rank information for the PUSCH associated only with the first SRS resource set is m1;
determining maximum transmission rank information for a PUSCH associated only with the second SRS resource set is m2; and
determining maximum transmission rank information for a PUSCH associated with both the first SRS resource set and the second SRS resource set is min(m1, m2) or m3 (m3 is less than or equal to min(m1, m2)).

Optionally, m3 is configured by the network-side device using higher-layer signaling.

(2) In some embodiments of this application, optionally, before the determining, by a terminal, maximum transmission rank information for a PUSCH, the method further includes:
receiving, by the terminal, second configuration information sent by the network-side device, the second configuration information including an indicated value S for indicating the maximum transmission rank information.

The determining, by a terminal, maximum transmission rank information for a PUSCH includes:
determining, by the terminal based on the indicated value and a maximum number of SRS ports of the SRS resource set, the maximum transmission rank information for the PUSCH.

Optionally, the determining, by the terminal based on the indicated value S and a maximum number of SRS ports of the SRS resource set, the maximum transmission rank information for the PUSCH includes:
determining that maximum transmission rank information for a PUSCH associated only with a target SRS resource set is the indicated value or a smaller one of a maximum number of SRS ports of the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: maximum numbers of SRS ports of the M SRS resource sets and the indicated value, or is a smallest one of the following values: maximum numbers of SRS ports of each of the SRS resource sets other than an SRS resource set with the smallest identifier and the indicated value, M being an integer less than or equal to N.

For example, the network-side device configures one piece of maximum transmission rank information S, and the network-side device configures two SRS resource sets for the terminal. The identifier of the first SRS resource set is smaller than the identifier of the second SRS resource set. The terminal determines the maximum number of SRS ports of the first SRS resource set as s1 based on a configuration of the first SRS resource set, and determines the maximum number of SRS ports of the second SRS resource set as s2 based on a configuration of the second SRS resource set.

The maximum transmission rank information for the PUSCH determined by the terminal includes:
the maximum transmission rank information for the PUSCH associated only with the first SRS resource set is min(s1, S) or S;
maximum transmission rank information for a PUSCH associated only with the second SRS resource set is min(s2, S) or S; and
maximum transmission rank information for a PUSCH associated with both the first SRS resource set and the second SRS resource set is min(S, s1, s2) or min(s2, S).

### 2. The SRS resource set is an SRS resource set for non-codebook transmission

(1) In some embodiments of this application, optionally, before the determining, by a terminal, the maximum transmission rank information for the PUSCH, the method further includes: receiving, by the terminal, first configuration information sent by a network-side device, the first configuration information including N pieces of maximum transmission rank information, where the N pieces of maximum transmission rank information are in one-to-one association with the N SRS resource sets, and N is an integer greater than or equal to 2.

The determining, by a terminal, maximum transmission rank information for a PUSCH includes:
determining that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
determining that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

For example, the network-side device configures two pieces of maximum transmission rank information, n1 and n2, the two pieces of maximum transmission rank information being in one-to-one association with two SRS resource sets configured for the terminal. The identifier of the first SRS resource set is smaller than the identifier of the second SRS resource set, and the maximum transmission rank n1 associated with the first SRS resource set is greater than or equal to the maximum transmission rank n2 associated with the second SRS resource set.

The maximum transmission rank information for the PUSCH determined by the terminal includes:
the maximum transmission rank information for the PUSCH associated only with the first SRS resource set is n1;
maximum transmission rank information for a PUSCH associated only with the second SRS resource set is n2; and
maximum transmission rank information for a PUSCH associated with both the first SRS resource set and the second SRS resource set is min(n1, n2) or n3 (n3 is less than or equal to min(n1, n2)).

Optionally, n3 is configured by the network-side device using higher-layer signaling.

(2) In some embodiments of this application, optionally, before the determining, by a terminal, maximum transmission rank information for a PUSCH, the method further includes:
receiving, by the terminal, third configuration information sent by the network-side device, the third configuration information including an indicated value for indicating the maximum transmission rank information.

The determining, by a terminal, maximum transmission rank information for a PUSCH includes:
determining, by the terminal based on the indicated value and a number of SRS resources in the SRS resource set, the maximum transmission rank information for the PUSCH.

Optionally, the determining, by the terminal based on the indicated value and a number of SRS resources in the SRS resource set, the maximum transmission rank information for the PUSCH includes:
determining that maximum transmission rank information for a PUSCH associated only with a target SRS resource set is the indicated value or a smaller one of a number of SRS resources in the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets and the indicated value, or is a smallest one of the following values: numbers of SRS resources in each of the SRS resource sets other than an SRS resource set with the smallest identifier and the indicated value, M being an integer less than or equal to N.

For example, the network-side device configures one indicated value, and the network-side device configures two SRS resource sets for the terminal. The identifier of the first SRS resource set is smaller than the identifier of the second SRS resource set. The terminal determines the number of SRS resources in the first SRS resource set as u1 based on a configuration of the first SRS resource set, and determines the number of SRS resources in the second SRS resource set as u2 based on a configuration of the second SRS resource set.

The maximum transmission rank information for the PUSCH determined by the terminal includes:
the maximum transmission rank information for the PUSCH associated only with the first SRS resource set is min(u1, U) or U;
maximum transmission rank information for a PUSCH associated only with the second SRS resource set is min(u2, U) or U; and
maximum transmission rank information for a PUSCH associated with both the first SRS resource set and the second SRS resource set is min(U, u1, u2) or min(u2, U).

(3) In some embodiments of this application, optionally, the determining, by a terminal, maximum transmission rank information for a PUSCH includes:
determining, by the terminal based on a number of SRS resources in the SRS resource set, the maximum transmission rank information for the PUSCH.

Optionally, the determining, by the terminal based on a number of SRS resources in the SRS resource set, the maximum transmission rank information for the PUSCH includes:
determining that maximum transmission rank information for a PUSCH associated only with a target SRS resource set is a number of SRS resources in the target SRS resource set, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

For example, the network-side device configures no maximum transmission rank information, and the network-side device configures two SRS resource sets for the terminal. The identifier of the first SRS resource set is smaller than the identifier of the second SRS resource set. The terminal determines the number of SRS resources in the first SRS resource set as u1 based on a configuration of the first SRS resource set, and determines the number of SRS resources in the second SRS resource set as u2 based on a configuration of the second SRS resource set.

The maximum transmission rank information for the PUSCH determined by the terminal includes:
the maximum transmission rank information for the PUSCH associated only with the first SRS resource set is u1;
maximum transmission rank information for a PUSCH associated only with the second SRS resource set is u2; and
maximum transmission rank information for a PUSCH associated with both the first SRS resource set and the second SRS resource set is min(u1, u2) or u2.

Referring to FIG. 4, an embodiment of this application provides a method for determining an uplink channel transmission rank, including:
Step 41: A terminal determines maximum transmission rank information for a PUSCH. The maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

In this embodiment of this application, in multi-TRP scenarios, different maximum transmission ranks are configured for different TRPs, which ensures that when transitioning to single-TRP transmission, the terminal can transmit a greater number of layers based on the current TRP configuration, thereby achieving better throughput performance.

For example, if two SRS resource sets are configured for the terminal, the maximum transmission rank information for the PUSCH determined by the terminal includes:
the maximum transmission rank information for the PUSCH associated only with the first SRS resource set;
maximum transmission rank information for a PUSCH associated only with the second SRS resource set; and
maximum transmission rank information for a PUSCH associated with both the first SRS resource set and the second SRS resource set.

In this embodiment of this application, optionally, before the determining, by a terminal, the maximum transmission rank information for the PUSCH, the method further includes: receiving, by the terminal, configuration information of N SRS resource sets sent by a network-side device, where the SRS resource sets are SRS resource sets for codebook transmission or SRS resource sets for non-codebook transmission.

### 1. The SRS resource set is an SRS resource set for codebook transmission

(1) In some embodiments of this application, optionally, before the determining, by a terminal, the maximum transmission rank information for the PUSCH, the method further includes: receiving, by the terminal, first configuration information sent by a network-side device, the first configuration information including N pieces of maximum transmission rank information, where the N pieces of maximum transmission rank information are in one-to-one association with the N SRS resource sets, and N is an integer greater than or equal to 2.

The determining, by a terminal, maximum transmission rank information for a PUSCH includes:
determining that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
determining that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

For example, the network-side device configures two pieces of maximum transmission rank information, m1 and m2, the two pieces of maximum transmission rank information being in one-to-one association with two SRS resource sets configured for the terminal. The identifier of the first SRS resource set is smaller than the identifier of the second SRS resource set, and the maximum transmission rank m1 associated with the first SRS resource set is greater than or equal to the maximum transmission rank m2 associated with the second SRS resource set.

The maximum transmission rank information for the PUSCH determined by the terminal includes:
the maximum transmission rank information for the PUSCH associated only with the first SRS resource set is m1;
maximum transmission rank information for a PUSCH associated only with the second SRS resource set is m2; and
maximum transmission rank information for a PUSCH associated with both the first SRS resource set and the second SRS resource set is min(m1, m2) or m3 (m3 is less than or equal to min(m1, m2)).

Optionally, m3 is configured by the network-side device using higher-layer signaling.

(2) In some embodiments of this application, optionally, before the determining, by a terminal, maximum transmission rank information for a PUSCH, the method further includes:
receiving, by the terminal, second configuration information sent by the network-side device, the second configuration information including an indicated value S for indicating the maximum transmission rank information.

The determining, by a terminal, maximum transmission rank information for a PUSCH includes:
determining, by the terminal based on the indicated value S and a maximum number of SRS ports of the SRS resource set, the maximum transmission rank information for the PUSCH.

Optionally, the determining, by the terminal based on the indicated value S and a maximum number of SRS ports of the SRS resource set, the maximum transmission rank information for the PUSCH includes:
determining that maximum transmission rank information for a PUSCH associated only with a target SRS resource set is the indicated value or a smaller one of a maximum number of SRS ports of the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: maximum numbers of SRS ports of the M SRS resource sets and the indicated value, or is a smallest one of the following values: maximum numbers of SRS ports of each of the SRS resource sets other than an SRS resource set with the smallest identifier and the indicated value, M being an integer less than or equal to N.

For example, the network-side device configures one piece of maximum transmission rank information S, and the network-side device configures two SRS resource sets for the terminal. The identifier of the first SRS resource set is smaller than the identifier of the second SRS resource set. The terminal determines the maximum number of SRS ports of the first SRS resource set as s1 based on a configuration of the first SRS resource set, and determines the maximum number of SRS ports of the second SRS resource set as s2 based on a configuration of the second SRS resource set.

The maximum transmission rank information for the PUSCH determined by the terminal includes:
the maximum transmission rank information for the PUSCH associated only with the first SRS resource set is min(s1, S) or S;
maximum transmission rank information for a PUSCH associated only with the second SRS resource set is min(s2, S) or S; and
maximum transmission rank information for a PUSCH associated with both the first SRS resource set and the second SRS resource set is min(S, s1, s2) or min(s2, S).

### 2. The SRS resource set is an SRS resource set for non-codebook transmission

(1) In some embodiments of this application, optionally, before the determining, by a terminal, the maximum transmission rank information for the PUSCH, the method further includes: receiving, by the terminal, first configuration information sent by a network-side device, the first configuration information including N pieces of maximum transmission rank information, where the N pieces of maximum transmission rank information are in one-to-one association with the N SRS resource sets, and N is an integer greater than or equal to 2.

The determining, by a terminal, maximum transmission rank information for a PUSCH includes:
determining that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
determining that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

For example, the network-side device configures two pieces of maximum transmission rank information, n1 and n2, the two pieces of maximum transmission rank information being in one-to-one association with two SRS resource sets configured for the terminal. The identifier of the first SRS resource set is smaller than the identifier of the second SRS resource set, and the maximum transmission rank n1 associated with the first SRS resource set is greater than or equal to the maximum transmission rank n2 associated with the second SRS resource set.

The maximum transmission rank information for the PUSCH determined by the terminal includes:
the maximum transmission rank information for the PUSCH associated only with the first SRS resource set is n1;
maximum transmission rank information for a PUSCH associated only with the second SRS resource set is n2; and
maximum transmission rank information for a PUSCH associated with both the first SRS resource set and the second SRS resource set is min(n1, n2) or n3 (n3 is less than or equal to min(n1, n2)).

Optionally, n3 is configured by the network-side device using higher-layer signaling.

(2) In some embodiments of this application, optionally, before the determining, by a terminal, maximum transmission rank information for a PUSCH, the method further includes:
receiving, by the terminal, third configuration information sent by the network-side device, the third configuration information including an indicated value for indicating the maximum transmission rank information.

The determining, by a terminal, maximum transmission rank information for a PUSCH includes:
determining, by the terminal based on the indicated value and a number of SRS resources in the SRS resource set, the maximum transmission rank information for the PUSCH.

Optionally, the determining, by the terminal based on the indicated value and a number of SRS resources in the SRS resource set, the maximum transmission rank information for the PUSCH includes:
determining that maximum transmission rank information for a PUSCH associated only with a target SRS resource set is the indicated value or a smaller one of a number of SRS resources in the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets and the indicated value, or is a smallest one of the following values: numbers of SRS resources in each of the SRS resource sets other than an SRS resource set with the smallest identifier and the indicated value, M being an integer less than or equal to N.

For example, the network-side device configures one indicated value, and the network-side device configures two SRS resource sets for the terminal. The identifier of the first SRS resource set is smaller than the identifier of the second SRS resource set. The terminal determines the number of SRS resources in the first SRS resource set as u1 based on a configuration of the first SRS resource set, and determines the number of SRS resources in the second SRS resource set as u2 based on a configuration of the second SRS resource set.

The maximum transmission rank information for the PUSCH determined by the terminal includes:
the maximum transmission rank information for the PUSCH associated only with the first SRS resource set is min(u1, U) or U;
maximum transmission rank information for a PUSCH associated only with the second SRS resource set is min(u2, U) or U; and
maximum transmission rank information for a PUSCH associated with both the first SRS resource set and the second SRS resource set is min(U, u1, u2) or min(u2, U).

(3) In some embodiments of this application, optionally, the determining, by a terminal, maximum transmission rank information for a PUSCH includes:
determining, by the terminal based on a number of SRS resources in the SRS resource set, the maximum transmission rank information for the PUSCH.

Optionally, the determining, by the terminal based on a number of SRS resources in the SRS resource set, the maximum transmission rank information for the PUSCH includes:
determining that maximum transmission rank information for a PUSCH associated only with a target SRS resource set is a number of SRS resources in the target SRS resource set, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

For example, the network-side device configures no maximum transmission rank information, and the network-side device configures two SRS resource sets for the terminal. The identifier of the first SRS resource set is smaller than the identifier of the second SRS resource set. The terminal determines the number of SRS resources in the first SRS resource set as u1 based on a configuration of the first SRS resource set, and determines the number of SRS resources in the second SRS resource set as u2 based on a configuration of the second SRS resource set.

The maximum transmission rank information for the PUSCH determined by the terminal includes:
the maximum transmission rank information for the PUSCH associated only with the first SRS resource set is u1;
maximum transmission rank information for a PUSCH associated only with the second SRS resource set is u2; and
maximum transmission rank information for a PUSCH associated with both the first SRS resource set and the second SRS resource set is min(u1, u2) or u2.

It should be noted that the method for indicating downlink control information provided in this embodiment of this application may be performed by an apparatus for interpreting downlink control information or a control module for performing the method for indicating downlink control information in the apparatus for interpreting downlink control information. In this embodiment of this application, the apparatus for interpreting downlink control information provided in the embodiments of this application is described by using an example in which the apparatus for interpreting downlink control information performs the method for indicating downlink control information.

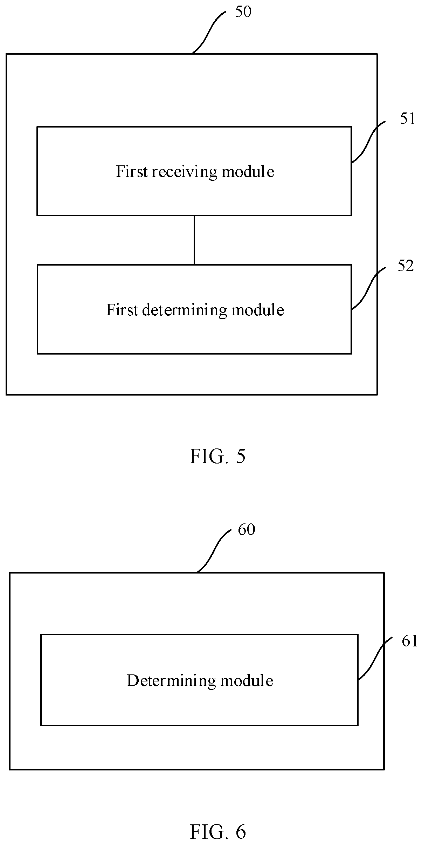

Referring to FIG. 5, FIG. 5 is a schematic structural diagram of an apparatus for interpreting downlink control information according to an embodiment of this application. The apparatus includes:
a first receiving module 51 configured to receive DCI for scheduling a PUSCH; and
a first determining module 52 configured to determine, based on maximum transmission rank information for the PUSCH, a bit length of a target field of the DCI and significant bits in the target field, where the target field includes at least one of the following:
   at least one SRI field;
   at least one TPMI field; and
   a PTRS-DMRS field.

In this embodiment of this application, it is specified that the terminal determines, based on maximum transmission rank information for a PUSCH, a bit length of a target field of DCI for scheduling the PUSCH and significant bits in the target field, so that the terminal can correctly interpret the target field of the DCI and carry out correct PUSCH transmission.

Optionally, the DCI includes N TMPI fields, where the N TMPI fields are in one-to-one association with N sounding reference signal SRS resource sets corresponding to the terminal, and N is an integer greater than or equal to 2. The first determining module 52 is configured to determine, based on the maximum transmission rank information for the PUSCH, bit lengths of the N TPMI fields and significant bits in the target field.

Optionally, a bit length of a first TPMI field associated with a first SRS resource set is determined based on the following two factors: a maximum number of SRS ports of the first SRS resource set and first transmission rank information, where the first transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a TPMI field associated with a second SRS resource set is determined based on the following two factors: a maximum number of SRS ports of the second SRS resource set and first information, the second SRS resource set being an SRS resource set in the N SRS resource sets other than the first SRS resource set; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated simultaneously with the N SRS resource sets.

Optionally, the first determining module 52 is configured to, when the DCI indicates that a first TPMI field is used to indicate a precoding matrix for transmission of a first PUSCH resource, determine that X bits of the least significant bits in the first TPMI field are significant bits, or that the most significant X1 bits in the first TPMI field are zeros and the remaining bits are significant bits; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
X or X1 is determined based on the number of SRS ports of the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

Optionally, the first determining module 52 is configured to, when the DCI indicates that a first TPMI field is used to indicate a precoding matrix for transmission of a first PUSCH resource, determine that first Y codepoints of the first TPMI field are significant bits; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
Y is determined based on the number of SRS ports of the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

Optionally, the DCI includes N SRI fields, where the N SRI fields are in one-to-one association with N SRS resource sets corresponding to the terminal, and N is an integer greater than or equal to 2; and
Optionally, the first determining module 52 is configured to determine, based on the maximum transmission rank information for the PUSCH, bit lengths of the N SRI fields and significant bits in the target field.

Optionally, a bit length of a first SRI field associated with a first SRS resource set is determined based on the following two factors: a number of SRS resources in the first SRS resource set and second transmission rank information, where the second transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a SRI field associated with a second SRS resource set is determined based on the following two factors: a number of SRS resources in the second SRS resource set and first information, the second SRS resource set being an SRS resource set in the N SRS resource sets other than the first SRS resource set; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated simultaneously with the N SRS resource sets.

Optionally, the first determining module 52 is configured to, when the DCI indicates that a first SRI field is used to indicate an SRS resource group for transmission of a first PUSCH resource, determine that W bits of the least significant bits in the first SRI field are significant bits, or that the most significant W1 bits in the first SRI field are zeros and the remaining bits are significant bits; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
W or W1 is determined based on the number of SRS resources in the second SRS resource set and/or second information. Optionally, the second information includes at least one of the following: maximum transmission rank information for a PUSCH associated only with the second SRS resource set, maximum transmission rank information configured by the network side, and maximum transmission rank supported by the terminal.

Optionally, the first determining module 52 is configured to, when the DCI indicates that a first SRI field is used to indicate an SRS resource for transmission of a first PUSCH resource, determine that first Z codepoints of the first SRI field are significant bits and the remaining codepoints are reserved; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
Z is determined based on the number of SRS resources in the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

Optionally, the terminal is configured with N SRS resource sets, N being an integer greater than or equal to 2; and the determining, by the terminal based on maximum transmission rank information for the PUSCH, a bit length of a target field of the DCI and significant bits in the target field includes:
in a case that the maximum transmission rank information for each PUSCH associated with the SRS resource set is 1, determining, by the terminal, that the PTRS-DMRS field of the DCI is 0 bits, or otherwise, 2 bits.

Optionally, the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

Optionally, the apparatus further includes:
a second receiving module configured to receive configuration information of N SRS resource sets sent by a network-side device, where the SRS resource sets are SRS resource sets for codebook transmission or non-codebook transmission.

Optionally, the apparatus further includes:
a third receiving module configured to receive first configuration information sent by the network-side device, the first configuration information including N pieces of maximum transmission rank information, where the N pieces of maximum transmission rank information are in one-to-one association with N SRS resource sets, and N is an integer greater than or equal to 2; and
a second determining module configured to determine, based on the first configuration information, the maximum transmission rank information for the PUSCH, where
maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

Optionally, the SRS resource set is an SRS resource set for codebook transmission.

Optionally, the apparatus further includes:
a fourth receiving module configured to receive second configuration information sent by the network-side device, the second configuration information including an indicated value for indicating the maximum transmission rank information; and
a third determining module configured to determine, based on the indicated value and a maximum number of SRS ports of the SRS resource set, the maximum transmission rank information for the PUSCH.

Optionally, the third determining module is configured to:
determine that maximum transmission rank information for a PUSCH associated only with a target SRS resource set is the indicated value or a smaller one of a maximum number of SRS ports of the target SRS resource set and the indicated value, where the target SRS resource set is any SRS resource set in the N SRS resource sets;
   and/or
determine that maximum transmission rank information for a PUSCH associated simultaneously with M SRS resource sets is a smallest one of the following values: maximum numbers of SRS ports of the M SRS resource sets and the indicated value, or is a smallest one of the following values: maximum numbers of SRS ports of each of the SRS resource sets other than an SRS resource set with the smallest identifier and the indicated value, M being an integer less than or equal to N.

Optionally, the SRS resource set is an SRS resource set for non-codebook transmission.

Optionally, the apparatus further includes:
a fifth receiving module configured to receive third configuration information sent by the network-side device, the third configuration information including an indicated value U for indicating the maximum transmission rank information; and
a fourth determining module configured to determine, based on the indicated value and a number of SRS resources in the SRS resource set, the maximum transmission rank information for the PUSCH.

Optionally, the fourth determining module is configured to:
determine that maximum transmission rank information for a PUSCH associated only with a target SRS resource set is the indicated value or a smaller one of a number of SRS resources in the target SRS resource set and the indicated value, where the target SRS resource set is any SRS resource set in the N SRS resource sets;
   and/or
determine that maximum transmission rank information for a PUSCH associated simultaneously with M SRS resource sets is a smallest one of the following values: numbers of SRS resources in the M SRS resource sets and the indicated value, or is a smallest one of the following values: numbers of SRS resources in each of the SRS resource sets other than an SRS resource set with the smallest identifier and the indicated value, M being an integer less than or equal to N.

Optionally, the SRS resource set is an SRS resource set for non-codebook transmission.

The apparatus further includes:
a fifth determining module configured to determine, based on a number of SRS resources in the SRS resource set, the maximum transmission rank information for the PUSCH.

Optionally, the fifth determining module is configured to:
determine that maximum transmission rank information for a PUSCH associated only with a target SRS resource set is a number of SRS resources in the target SRS resource set, where the target SRS resource set is any SRS resource set in the N SRS resource sets;
   and/or
determine that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

The apparatus for interpreting downlink control information in this embodiment of this application may be an apparatus, or an electronic device with an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The apparatus for interpreting downlink control information provided in this embodiment of this application can implement the processes implemented in the method embodiment in FIG. 3, with the same technical effects achieved. To avoid repetition, details are not repeated herein.

It should be noted that the method for determining an uplink channel transmission rank provided in this embodiment of this application may be performed by an apparatus for determining an uplink channel transmission rank, or by a control module in the apparatus for determining an uplink channel transmission rank for performing the method for determining an uplink channel transmission rank. In this embodiment of this application, the apparatus for determining an uplink channel transmission rank provided in this embodiment of this application is described by using an example in which the apparatus for determining an uplink channel transmission rank performs the method for determining an uplink channel transmission rank.

Referring to FIG. 6, an embodiment of this application provides an apparatus 60 for determining an uplink channel transmission rank, including:
a determining module 61 configured to determine maximum transmission rank information for a PUSCH, where the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

In the embodiments of this application, in multi-TRP scenarios, different maximum transmission ranks are configured for different TRPs, which ensures that when transitioning to single-TRP transmission, the terminal can transmit a greater number of layers based on the current TRP configuration, thereby achieving better throughput performance.

Optionally, the apparatus further includes:
a first receiving module configured to receive configuration information of N SRS resource sets sent by a network-side device, where the SRS resource sets are SRS resource sets for codebook transmission or non-codebook transmission.

Optionally, the apparatus further includes:
a second receiving module configured to receive first configuration information sent by the network-side device, the first configuration information including N pieces of maximum transmission rank information, where the N pieces of maximum transmission rank information are in one-to-one association with N SRS resource sets, and N is an integer greater than or equal to 2; and
the determining module 61 is configured to:
   determine that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
      and/or
   determine that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

Optionally, the SRS resource set is an SRS resource set for codebook transmission.

The apparatus further includes:
a third receiving module configured to receive second configuration information sent by the network-side device, the second configuration information including an indicated value for indicating the maximum transmission rank information; and
the determining module 61 configured to determine, based on the indicated value and a maximum number of SRS ports of the SRS resource set, the maximum transmission rank information for the PUSCH.

Optionally, the determining module 61 is configured to:
determine that maximum transmission rank information for a PUSCH associated only with a target SRS resource set is the indicated value or a smaller one of a maximum number of SRS ports of the target SRS resource set and the indicated value, where the target SRS resource set is any SRS resource set in the N SRS resource sets;
   and/or
determine that maximum transmission rank information for a PUSCH associated simultaneously with M SRS resource sets is a smallest one of the following values: maximum numbers of SRS ports of the M SRS resource sets and the indicated value, or is a smallest one of the following values: maximum numbers of SRS ports of each of the SRS resource sets other than an SRS resource set with the smallest identifier and the indicated value, M being an integer less than or equal to N.

Optionally, the SRS resource set is an SRS resource set for non-codebook transmission.

The apparatus further includes:
a fourth receiving module configured to receive third configuration information sent by the network-side device, the third configuration information including an indicated value for indicating the maximum transmission rank information; and
the determining module 61 configured to determine, based on the indicated value and a number of SRS resources in the SRS resource set, the maximum transmission rank information for the PUSCH.

The determining module 61 is configured to:
determine that maximum transmission rank information for a PUSCH associated only with a target SRS resource set is the indicated value or a smaller one of a number of SRS resources in the target SRS resource set and the indicated value, where the target SRS resource set is any SRS resource set in the N SRS resource sets;
   and/or
determine that maximum transmission rank information for a PUSCH associated simultaneously with M SRS resource sets is a smallest one of the following values: numbers of SRS resources in the M SRS resource sets and the indicated value, or is a smallest one of the following values: numbers of SRS resources in each of the SRS resource sets other than an SRS resource set with the smallest identifier and the indicated value, M being an integer less than or equal to N.

Optionally, the SRS resource set is an SRS resource set for non-codebook transmission. The determining module 61 is configured to determine, based on a number of SRS resources in the SRS resource set, the maximum transmission rank information for the PUSCH.

Optionally, the determining module 61 is configured to:
determine that maximum transmission rank information for a PUSCH associated only with a target SRS resource set is a number of SRS resources in the target SRS resource set, where the target SRS resource set is any SRS resource set in the N SRS resource sets;
   and/or
determine that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

The apparatus for determining an uplink channel transmission rank in this embodiment of this application may be an apparatus, or an apparatus or electronic device with an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The apparatus for determining an uplink channel transmission rank provided in this embodiment of this application is capable of implementing the processes implemented in the method embodiment in FIG. 4, with the same technical effects achieved. To avoid repetition, details are not repeated herein.

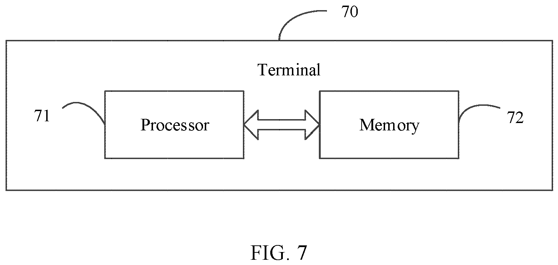

As shown in FIG. 7, an embodiment of this application further provides a terminal 70 including a processor 71, a memory 72, and a program or instructions stored in the memory 72 and capable of running on the processor 71, where when the program or instructions are executed by the processor 71, the processes of the foregoing embodiments of the method for indicating downlink control information or the method for determining an uplink channel transmission rank are implemented, with the same technical effects achieved. To avoid repetition, details are not repeated herein.

An embodiment of this application further provides a terminal, including a processor and a communications interface, where the communications interface is configured to receive DCI for scheduling a PUSCH, and the processor is further configured to determine, based on maximum transmission rank information for the PUSCH, a bit length of a target field of the DCI and significant bits in the target field, where the target field includes at least one of the following:
at least one SRI field;
at least one TPMI field; and
a PTRS-DMRS field.

The terminal embodiment is corresponding to the foregoing embodiment of the method for indicating downlink control information. The implementation processes and implementations of the foregoing embodiment of the method for indicating downlink control information are applicable to the terminal embodiment, with the same technical effects achieved.

An embodiment of this application further provides a terminal, including a processor and a communications interface, where the processor is configured to determine maximum transmission rank information for a PUSCH, and the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

The terminal embodiment is corresponding to the foregoing embodiment of the method for determining an uplink channel transmission rank. The implementation processes and implementations of the foregoing embodiment of the method for determining an uplink channel transmission rank are applicable to the terminal embodiment, with the same technical effects achieved.

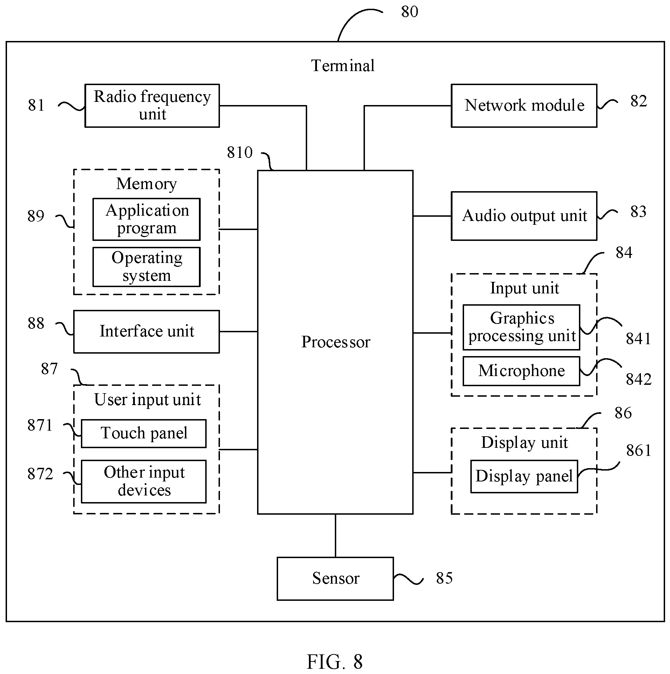

Specifically, FIG. 8 is a schematic diagram of a hardware structure of a terminal for implementing embodiments of this application.

The terminal 80 includes but is not limited to at least some of the components such as a radio frequency unit 81, a network module 82, an audio output unit 83, an input unit 84, a sensor 85, a display unit 86, a user input unit 87, an interface unit 88, a memory 89, and a processor 810.

It can be understood by those skilled in the art that the terminal 80 may further include a power supply (for example, a battery) supplying power to the components. The power supply may be logically connected to the processor 810 via a power management system, so that functions such as charge management, discharge management, and power consumption management are implemented by using the power management system. The structure of the terminal shown in FIG. 8 does not constitute any limitation on the terminal, and the terminal may include more or fewer components than shown in the figure, or combine some of the components, or have different arrangements of the components. Details are not described herein.

It should be understood that in this embodiment of this application, the input unit 84 may include a graphics processing unit (Graphics Processing Unit, GPU) 841 and a microphone 842. The graphics processing unit 841 processes image data of a static picture or a video that is obtained by an image capture apparatus (for example, a camera) in a video capture mode or an image capture mode. The display unit 86 may include a display panel 861. The display panel 861 may be configured in a form of a liquid crystal display, an organic light-emitting diode display, or the like. The user input unit 87 includes a touch panel 871 and other input devices 872. The touch panel 871 is also referred to as a touchscreen. The touch panel 871 may include two parts: a touch detection apparatus and a touch controller. The other input devices 872 may include but are not limited to a physical keyboard, a function button (for example, a volume control button or a power on/off button), a trackball, a mouse, and a joystick. Details are not described herein.

In this embodiment of this application, the radio frequency unit 81 transmits downlink information received from a network-side device to the processor 810 for processing, and in addition, transmits uplink data to the network-side device. Generally, the radio frequency unit 81 includes but is not limited to an antenna, at least one amplifier, a transceiver, a coupler, a low noise amplifier, and a duplexer.

The memory 89 may be configured to store software programs or instructions and various data. The memory 89 may include a program or instruction storage area and a data storage area. The program or instruction storage area may store an operating system, an application program or instruction required by at least one function (for example, a sound playback function or an image playback function), and the like. In addition, the memory 89 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 810 may include one or more processing units. Optionally, the processor 810 may integrate an application processor and a modem processor. The application processor mainly processes an operating system, a user interface, an application program or instructions, and the like. The modem processor mainly processes wireless communication, and for example, may be a baseband processor. It can be understood that the modem processor may alternatively be not integrated in the processor 810.

In some embodiments, the radio frequency unit 81 is configured to receive DCI for scheduling PUSCH.

The processor 810 is further configured to determine, based on maximum transmission rank information for the PUSCH, a bit length of a target field of the DCI and significant bits in the target field, where the target field includes at least one of the following:
at least one SRI field;
at least one TPMI field; and
a PTRS-DMRS field.

In the embodiments of this application, it is specified that the terminal determines, based on maximum transmission rank information for a PUSCH, a bit length of a target field of DCI for scheduling the PUSCH and significant bits in the target field, so that the terminal can correctly interpret the target field of the DCI and carry out correct PUSCH transmission.

Optionally, the DCI includes N TMPI fields, where the N TMPI fields are in one-to-one association with N sounding reference signal SRS resource sets for codebook transmission corresponding to the terminal, and N is an integer greater than or equal to 2. The determining, based on maximum transmission rank information for the PUSCH, a bit length of a target field of the DCI and significant bits in the target field includes: determining, based on the maximum transmission rank information for the PUSCH, bit lengths of the N TPMI fields and significant bits in the target field.

Optionally, a bit length of a first TPMI field associated with a first SRS resource set is determined based on the following two factors: a maximum number of SRS ports of the first SRS resource set and first transmission rank information, where the first transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a TPMI field associated with a second SRS resource set is determined based on the following two factors: a maximum number of SRS ports of the second SRS resource set and first information, the second SRS resource set being an SRS resource set in the N SRS resource sets other than the first SRS resource set; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated simultaneously with the N SRS resource sets.

Optionally, the determining, based on the maximum transmission rank information for the PUSCH, bit lengths of the N TPMI fields and significant bits in the target field includes:
when the DCI indicates that a first TPMI field is used to indicate a precoding matrix for transmission of a first PUSCH resource, determining that X bits of the least significant bits in the first TPMI field are significant bits, or that the most significant X1 bits in the first TPMI field are zeros and the remaining bits are significant bits; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
X or X1 is determined based on the number of SRS ports of the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

Optionally, the determining, based on the maximum transmission rank information for the PUSCH, bit lengths of the N TPMI fields and significant bits in the target field includes: when the DCI indicates that a first TPMI field is used to indicate a precoding matrix for transmission of a first PUSCH resource, determining that first Y codepoints of the first TPMI field are significant bits and the remaining codepoints are reserved; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
Y is determined based on the number of SRS ports of the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

Optionally, the DCI includes N SRI fields, where the N SRI fields are in one-to-one association with N SRS resource sets corresponding to the terminal, and N is an integer greater than or equal to 2; and
the determining, based on maximum transmission rank information for the PUSCH, a bit length of a target field of the DCI and significant bits in the target field includes: determining, based on the maximum transmission rank information for the PUSCH, bit lengths of the N SRI fields and significant bits in the target field.

Optionally, a bit length of a first SRI field associated with a first SRS resource set is determined based on the following two factors: a number of SRS resources in the first SRS resource set and first transmission rank information, where the first transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a SRI field associated with a second SRS resource set is determined based on the following two factors: a number of SRS resources in the second SRS resource set and first information, the second SRS resource set being an SRS resource set in the N SRS resource sets other than the first SRS resource set; where
the first information includes at least one of the following:
   the maximum transmission rank information for the PUSCH associated only with the first SRS resource set;
   maximum transmission rank information for a PUSCH associated only with the second SRS resource set; and
   maximum transmission rank information for a PUSCH associated simultaneously with the N SRS resource sets.

Optionally, the determining, based on the maximum transmission rank information for the PUSCH, bit lengths of the N SRI fields and significant bits in the target field includes: when the DCI indicates that a first SRI field is used to indicate an SRS resource group for transmission of a first PUSCH resource, determining that W bits of the least significant bits in the first SRI field are significant bits, or that the most significant W1 bits in the first SRI field are zeros and the remaining bits are significant bits; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
W or W1 is determined based on the number of SRS resources in the second SRS resource set and/or second information. Optionally, the second information includes at least one of the following: maximum transmission rank information for a PUSCH associated only with the second SRS resource set, maximum transmission rank information configured by the network side, and maximum transmission rank supported by the terminal.

Optionally, the determining, based on the maximum transmission rank information for the PUSCH, bit lengths of the N SRI fields and significant bits in the target field includes: when the DCI indicates that a first SRI field is used to indicate an SRS resource for transmission of a first PUSCH resource, determining that first Z codepoints of the first SRI field are significant bits and the remaining codepoints are reserved; where
the first PUSCH resource is associated with a PUSCH transmission occasion of an SRS resource in a second SRS resource set;
the second SRS resource set is an SRS resource set in the N SRS resource sets other than a first SRS resource set;
the first SRS resource set is an SRS resource set with the smallest identifier or a first SRS resource set in the N SRS resource sets; and
Z is determined based on the number of SRS resources in the second SRS resource set and/or second information.

Optionally, the second information includes at least one of the following: maximum transmission rank information for a PUSCH associated only with the second SRS resource set, maximum transmission rank information configured by the network side, and maximum transmission rank supported by the terminal.

Optionally, the terminal is configured with N SRS resource sets, N being an integer greater than or equal to 2; and the determining, by the terminal based on maximum transmission rank information for the PUSCH, a bit length of a target field of the DCI and significant bits in the target field includes:
in a case that the maximum transmission rank information for each PUSCH associated with the SRS resource set is 1, determining, by the terminal, that the PTRS-DMRS field of the DCI is 0 bits, or otherwise, 2 bits.

Optionally, the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

Optionally, the radio frequency unit 81 is further configured to receive configuration information of N SRS resource sets sent by a network-side device, where the SRS resource sets are SRS resource sets for codebook transmission or non-codebook transmission.

Optionally, the radio frequency unit 81 is further configured to receive first configuration information sent by the network-side device, the first configuration information including N pieces of maximum transmission rank information, where the N pieces of maximum transmission rank information are in one-to-one association with N SRS resource sets, and N is an integer greater than or equal to 2.

The determining maximum transmission rank information for a PUSCH includes:
determining that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
determining that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

Optionally, the SRS resource set is an SRS resource set for codebook transmission.

Optionally, the radio frequency unit 81 is further configured to receive second configuration information sent by the network-side device, the second configuration information including an indicated value for indicating the maximum transmission rank information.

The determining maximum transmission rank information for a PUSCH includes: determining, based on the indicated value and a maximum number of SRS ports of the SRS resource set, the maximum transmission rank information for the PUSCH.

Optionally, the determining, based on the indicated value and a maximum number of SRS ports of the SRS resource set, the maximum transmission rank information for the PUSCH includes:
determining that maximum transmission rank information for a PUSCH associated only with a target SRS resource set is the indicated value or a smaller one of a maximum number of SRS ports of the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: maximum numbers of SRS ports of the M SRS resource sets and the indicated value, or is a smallest one of the following values: maximum numbers of SRS ports of each of the SRS resource sets other than an SRS resource set with the smallest identifier and the indicated value, M being an integer less than or equal to N.

Optionally, the SRS resource set is an SRS resource set for non-codebook transmission.

Optionally, the radio frequency unit 81 is further configured to receive third configuration information sent by the network-side device, the third configuration information including an indicated value U for indicating the maximum transmission rank information.

The determining maximum transmission rank information for a PUSCH includes: determining, based on the indicated value and a number of SRS resources in the SRS resource set, the maximum transmission rank information for the PUSCH.

Optionally, the determining, based on the indicated value and a number of SRS resources in the SRS resource set, the maximum transmission rank information for the PUSCH includes:
determining that maximum transmission rank information for a PUSCH associated only with a target SRS resource set is the indicated value or a smaller one of a number of SRS resources in the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets and the indicated value, or is a smallest one of the following values: numbers of SRS resources in each of the SRS resource sets other than an SRS resource set with the smallest identifier and the indicated value, M being an integer less than or equal to N.

Optionally, the SRS resource set is an SRS resource set for non-codebook transmission. The determining maximum transmission rank information for a PUSCH includes: determining, based on a number of SRS resources in the SRS resource set, the maximum transmission rank information for the PUSCH.

Optionally, the determining, based on a number of SRS resources in the SRS resource set, the maximum transmission rank information for the PUSCH includes:
determining that maximum transmission rank information for a PUSCH associated only with a target SRS resource set is a number of SRS resources in the target SRS resource set, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

In some embodiments, the processor 810 is configured to determine maximum transmission rank information for a PUSCH, where the maximum transmission rank information for the PUSCH includes:
maximum transmission rank information for a PUSCH associated only with a single SRS resource set configured for the terminal; and
maximum transmission rank information for a PUSCH associated simultaneously with multiple SRS resource sets configured for the terminal.

Optionally, the radio frequency unit 81 is configured to receive configuration information of N SRS resource sets sent by a network-side device, where the SRS resource sets are SRS resource sets for codebook transmission or non-codebook transmission.

Optionally, the radio frequency unit 81 is configured to receive first configuration information sent by the network-side device, the first configuration information including N pieces of maximum transmission rank information, where the N pieces of maximum transmission rank information are in one-to-one association with N SRS resource sets, and N is an integer greater than or equal to 2.

The determining maximum transmission rank information for a PUSCH includes:
determining that maximum transmission rank information for a PUSCH associated only with a target SRS resource set is a first value, where the first value is a maximum transmission rank configured by the network-side device for the target SRS resource set, and the target SRS resource set is any SRS resource set in the N SRS resource sets;
   and/or
determining that maximum transmission rank information for a PUSCH associated simultaneously with M SRS resource sets is a second value or a third value, where the second value is the smallest value of maximum transmission ranks configured by the network-side device for the M SRS resource sets, the third value is configured by the network-side device, and M is an integer less than or equal to N.

Optionally, the third value is configured by the network-side device using higher-layer signaling.

Optionally, a first SRS resource set in the N SRS resource sets corresponds to a highest maximum transmission rank, and the first SRS resource set is an SRS resource set with the smallest identifier or a first SRS resource set in the N SRS resource sets.

Optionally, the SRS resource set is an SRS resource set for codebook transmission.

Optionally, the radio frequency unit 81 is configured to receive second configuration information sent by the network-side device, the second configuration information including an indicated value S for indicating the maximum transmission rank information.

The determining maximum transmission rank information for a PUSCH includes: determining, based on the indicated value and a maximum number of SRS ports of the SRS resource set, the maximum transmission rank information for the PUSCH.

Optionally, the determining, based on the indicated value and a maximum number of SRS ports of the SRS resource set, the maximum transmission rank information for the PUSCH includes:
determining that maximum transmission rank information for a PUSCH associated only with a target SRS resource set is the indicated value or a smaller one of a maximum number of SRS ports of the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: maximum numbers of SRS ports of the M SRS resource sets and the indicated value, or is a smallest one of the following values: maximum numbers of SRS ports of each of the SRS resource sets other than an SRS resource set with the smallest identifier and the indicated value, M being an integer less than or equal to N.

Optionally, the SRS resource set is an SRS resource set for non-codebook transmission.

Optionally, the radio frequency unit 81 is configured to receive third configuration information sent by the network-side device, the third configuration information including an indicated value U for indicating the maximum transmission rank information.

The determining maximum transmission rank information for a PUSCH includes: determining, based on the indicated value and a number of SRS resources in the SRS resource set, the maximum transmission rank information for the PUSCH.

Optionally, the determining, based on the indicated value and a number of SRS resources in the SRS resource set, the maximum transmission rank information for the PUSCH includes:
determining that maximum transmission rank information for a PUSCH associated only with a target SRS resource set is the indicated value or a smaller one of a number of SRS resources in the target SRS resource set and the indicated value, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets and the indicated value, or is a smallest one of the following values: numbers of SRS resources in each of the SRS resource sets other than an SRS resource set with the smallest identifier and the indicated value, M being an integer less than or equal to N.

Optionally, the SRS resource set is an SRS resource set for non-codebook transmission. The determining maximum transmission rank information for a PUSCH includes: determining, based on a number of SRS resources in the SRS resource set, the maximum transmission rank information for the PUSCH.

Optionally, the determining, based on a number of SRS resources in the SRS resource set, the maximum transmission rank information for the PUSCH includes:
determining that maximum transmission rank information for a PUSCH associated only with a target SRS resource set is a number of SRS resources in the target SRS resource set, where the target SRS resource set is any SRS resource set in the N SRS resource sets;
   and/or
determining that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

An embodiment of this application further provides a readable storage medium. The readable storage medium may be non-volatile or volatile. The readable storage medium stores a program or instructions. When the program or instructions are executed by a processor, the processes of the foregoing embodiments of the method for indicating downlink control information or the method for determining an uplink channel transmission rank are implemented, with the same technical effects achieved. To avoid repetition, details are not repeated herein.

The processor is a processor in the terminal in the foregoing embodiments. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip, where the chip includes a processor and a communications interface, the communications interface is coupled to the processor, and the processor is configured to run a program or instructions to implement the processes of the foregoing embodiments of the method for indicating downlink control information or the method for determining an uplink channel transmission rank, with the same technical effects achieved. To avoid repetition, details are not repeated herein.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. In the absence of more restrictions, an element preceded by "including a ..." does not preclude another same element in the process, method, article, or apparatus that includes the element. In addition, it should be noted that the scope of the methods and apparatuses in the embodiments of this application is not limited to performing functions in the order shown or discussed, but may further include performing functions at substantially the same time or in reverse order depending on the involved functions. For example, the described method may be performed in an order different from the described order, and steps may be added, omitted, or combined. In addition, features described with reference to some examples may be combined in other examples.

By means of the foregoing description of the implementations, persons skilled in the art may clearly understand that the methods in the foregoing embodiments may be implemented by software with a necessary general hardware platform. Certainly, the methods in the foregoing embodiments may also be implemented by hardware. However, in many cases, the former is a preferred implementation. Based on such an understanding, the technical solutions of this application essentially, or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

Embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A method for indicating downlink control information is provided, comprising:
receiving, by a terminal, downlink control information DCI for scheduling a physical uplink shared channel PUSCH; and
determining, by the terminal based on maximum transmission rank information for the PUSCH, a bit length of a target field of the DCI and significant bits in the target field, wherein the target field comprises at least one of the following:
at least one sounding reference signal resource indicator SRI field;
at least one transmitted precoding matrix indicator TPMI field; and
a phase-tracking reference signal-demodulation reference signal PTRS-DMRS field.

2. The method according to claim 1, wherein the DCI comprises N TMPI fields, wherein the N TMPI fields are in one-to-one association with N sounding reference signal SRS resource sets corresponding to the terminal, and N is an integer greater than or equal to 2; and
the determining, by the terminal based on maximum transmission rank information for the PUSCH, a bit length of a target field of the DCI and significant bits in the target field comprises:
determining, by the terminal based on the maximum transmission rank information for the PUSCH, bit lengths of the N TPMI fields and significant bits in the target field.

3. The method according to claim 2, wherein
a bit length of a first TPMI field associated with a first SRS resource set is determined based on the following two factors: a maximum number of SRS ports of the first SRS resource set and first transmission rank information, wherein the first transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a TPMI field associated with a second SRS resource set is determined based on the following two factors: a maximum number of SRS ports of the second SRS resource set and first information, the second SRS resource set being an SRS resource set in the N SRS resource sets other than the first SRS resource set; wherein
the first information comprises at least one of the following:
the maximum transmission rank information for the PUSCH associated only with the first SRS resource set;
maximum transmission rank information for a PUSCH associated only with the second SRS resource set; and
maximum transmission rank information for a PUSCH associated simultaneously with the N SRS resource sets.

4. The method according to claim 2, wherein the determining, by the terminal based on the maximum transmission rank information for the PUSCH, bit lengths of the N TPMI fields and significant bits in the target field comprises:
when the DCI indicates that a first TPMI field is used to indicate a precoding matrix for transmission of a first PUSCH resource, determining that X bits of the least significant bits in the first TPMI field are significant bits, or that the most significant X1 bits in the first TPMI field are zeros and the remaining bits are significant bits; wherein
the first PUSCH resource is associated with a PUSCH transmission occasion of an SRS resource in a second SRS resource set;
the second SRS resource set is an SRS resource set in the N SRS resource sets other than a first SRS resource set; and
the first SRS resource set is an SRS resource set with the smallest identifier or a first SRS resource set in the N SRS resource sets.

5. The method according to claim 2, wherein the determining, by the terminal based on the maximum transmission rank information for the PUSCH, bit lengths of the N TPMI fields and significant bits in the target field comprises:
when the DCI indicates that a first TPMI field is used to indicate a precoding matrix for transmission of a first PUSCH resource, determining that first Y codepoints of the first TPMI field are significant bits; wherein
the first PUSCH resource is associated with a PUSCH transmission occasion of an SRS resource in a second SRS resource set;
the second SRS resource set is an SRS resource set in the N SRS resource sets other than a first SRS resource set; and
the first SRS resource set is an SRS resource set with the smallest identifier or a first SRS resource set in the N SRS resource sets.

6. The method according to claim 1, wherein the DCI comprises N SRI fields, wherein the N SRI fields are in one-to-one association with N SRS resource sets corresponding to the terminal, and N is an integer greater than or equal to 2; and
the determining, by the terminal based on maximum transmission rank information for the PUSCH, a bit length of a target field of the DCI and significant bits in the target field comprises:
determining, by the terminal based on the maximum transmission rank information for the PUSCH, bit lengths of the N SRI fields and significant bits in the target field.

7. The method according to claim 6, wherein
a bit length of a first SRI field associated with a first SRS resource set is determined based on the following two factors: a number of SRS resources in the first SRS resource set and second transmission rank information, wherein the second transmission rank information is maximum transmission rank information for a PUSCH associated only with the first SRS resource set, the first SRS resource set being an SRS resource set with the smallest identifier or a first SRS resource set in the N SRS resource sets;
and/or
a bit length of a SRI field associated with a second SRS resource set is determined based on the following two factors: a number of SRS resources in the second SRS resource set and first information, the second SRS resource set being an SRS resource set in the N SRS resource sets other than the first SRS resource set; wherein
the first information comprises at least one of the following:
the maximum transmission rank information for the PUSCH associated only with the first SRS resource set;
maximum transmission rank information for a PUSCH associated only with the second SRS resource set; and
maximum transmission rank information for a PUSCH associated simultaneously with the N SRS resource sets.

8. The method according to claim 6, wherein the determining, by the terminal based on the maximum transmission rank information for the PUSCH, bit lengths of the N SRI fields and significant bits in the target field comprises:
when the DCI indicates that a first SRI field is used to indicate an SRS resource group for transmission of a first PUSCH resource, determining that W bits of the least significant bits in the first SRI field are significant bits, or that the most significant W1 bits in the first SRI field are zeros and the remaining bits are significant bits; wherein
the first PUSCH resource is associated with a PUSCH transmission occasion of an SRS resource in a second SRS resource set;
the second SRS resource set is an SRS resource set in the N SRS resource sets other than a first SRS resource set; and
the first SRS resource set is an SRS resource set with the smallest identifier or a first SRS resource set in the N SRS resource sets.

9. The method according to claim 6, wherein the determining, by the terminal based on the maximum transmission rank information for the PUSCH, bit lengths of the N SRI fields and significant bits in the target field comprises:
when the DCI indicates that a first SRI field is used to indicate an SRS resource for transmission of a first PUSCH resource, determining that first Z codepoints of the first SRI field are significant bits; wherein
the first PUSCH resource is associated with a PUSCH transmission occasion of an SRS resource in a second SRS resource set;
the second SRS resource set is an SRS resource set in the N SRS resource sets other than a first SRS resource set; and
the first SRS resource set is an SRS resource set with the smallest identifier or a first SRS resource set in the N SRS resource sets.

10. The method according to claim 1, wherein the terminal is configured with N SRS resource sets, N being an integer greater than or equal to 2; and
the determining, by the terminal based on maximum transmission rank information for the PUSCH, a bit length of a target field of the DCI comprises:
in a case that the maximum transmission rank information for each PUSCH associated with the SRS resource set is 1, determining, by the terminal, that the PTRS-DMRS field of the DCI is 0 bits, or otherwise, 2 bits.

11. The method according to any one of claims 1 to 10, wherein the maximum transmission rank information for the PUSCH comprises:
maximum transmission rank information for a PUSCH associated only with a single SRS resource set configured for the terminal; and
maximum transmission rank information for a PUSCH associated simultaneously with multiple SRS resource sets configured for the terminal.

12. The method according to claim 11, further comprising:
receiving, by the terminal, configuration information of N SRS resource sets sent by a network-side device, wherein the SRS resource sets are SRS resource sets for codebook transmission or non-codebook transmission.

13. The method according to claim 11, wherein before the determining, by the terminal based on maximum transmission rank information for the PUSCH, a bit length of a target field of the DCI and significant bits in the target field, the method further comprises:
receiving, by the terminal, first configuration information sent by the network-side device, the first configuration information comprising N pieces of maximum transmission rank information, wherein the N pieces of maximum transmission rank information are in one-to-one association with N SRS resource sets corresponding to the terminal, and N is an integer greater than or equal to 2; and
determining, by the terminal based on the first configuration information, the maximum transmission rank information for the PUSCH.

14. The method according to claim 13, wherein the determining, by the terminal based on the first configuration information, the maximum transmission rank information for the PUSCH comprises:
determining that maximum transmission rank information for a PUSCH associated only with a target SRS resource set is a first value, wherein the first value is a maximum transmission rank configured by the network-side device for the target SRS resource set, and the target SRS resource set is any SRS resource set in the N SRS resource sets;
and/or
determining that maximum transmission rank information for a PUSCH associated simultaneously with M SRS resource sets is a second value or a third value, wherein the second value is the smallest value of maximum transmission ranks configured by the network-side device for the M SRS resource sets, the third value is configured by the network-side device, and M is an integer less than or equal to N.

15. The method according to claim 13, wherein a first SRS resource set in the N SRS resource sets corresponds to a highest maximum transmission rank, and the first SRS resource set is an SRS resource set with the smallest identifier or a first SRS resource set in the N SRS resource sets.

16. The method according to claim 12, wherein the SRS resource set is an SRS resource set for codebook transmission; and
before the determining, by the terminal based on maximum transmission rank information for the PUSCH, a bit length of a target field of the DCI and significant bits in the target field, the method further comprises:
receiving, by the terminal, second configuration information sent by the network-side device, the second configuration information comprising an indicated value for indicating the maximum transmission rank information; and
determining, by the terminal based on the indicated value and a maximum number of SRS ports of the SRS resource set, the maximum transmission rank information for the PUSCH.

17. The method according to claim 16, wherein the determining, by the terminal based on the indicated value and a maximum number of SRS ports of the SRS resource set, the maximum transmission rank information for the PUSCH comprises:
determining that maximum transmission rank information for a PUSCH associated only with a target SRS resource set is the indicated value or a smaller one of a maximum number of SRS ports of the target SRS resource set and the indicated value, wherein the target SRS resource set is any SRS resource set in the N SRS resource sets;
and/or
determining that maximum transmission rank information for a PUSCH associated simultaneously with M SRS resource sets is a smallest one of the following values: maximum numbers of SRS ports of the M SRS resource sets and the indicated value, or is a smallest value of maximum numbers of SRS ports of each of the SRS resource sets other than an SRS resource set with the smallest identifier and the indicated value, M being an integer less than or equal to N.

18. The method according to claim 12, wherein the SRS resource set is an SRS resource set for non-codebook transmission; and
before the determining, by the terminal based on maximum transmission rank information for the PUSCH, a bit length of a target field of the DCI and significant bits in the target field, the method further comprises:
receiving, by the terminal, third configuration information sent by the network-side device, the third configuration information comprising an indicated value for indicating the maximum transmission rank information; and
determining, by the terminal based on the indicated value and a number of SRS resources in the SRS resource set, the maximum transmission rank information for the PUSCH.

19. The method according to claim 18, wherein the determining, by the terminal based on the indicated value and a number of SRS resources in the SRS resource set, the maximum transmission rank information for the PUSCH comprises:
determining that maximum transmission rank information for a PUSCH associated only with a target SRS resource set is the indicated value or a smaller one of a number of SRS resources in the target SRS resource set and the indicated value, wherein the target SRS resource set is any SRS resource set in the N SRS resource sets;
and/or
determining that maximum transmission rank information for a PUSCH associated simultaneously with M SRS resource sets is a smallest one of the following values: numbers of SRS resources in the M SRS resource sets and the indicated value, or is a smallest value of numbers of SRS resources in each of the SRS resource sets other than an SRS resource set with the smallest identifier and the indicated value, M being an integer less than or equal to N.

20. The method according to claim 12, wherein the SRS resource set is an SRS resource set for non-codebook transmission; and
before the determining, by the terminal based on maximum transmission rank information for the PUSCH, a bit length of a target field of the DCI and significant bits in the target field, the method further comprises:
determining, by the terminal based on a number of SRS resources in the SRS resource set, the maximum transmission rank information for the PUSCH.

21. The method according to claim 20, wherein the determining, by the terminal based on a number of SRS resources in the SRS resource set, the maximum transmission rank information for the PUSCH comprises:
determining that maximum transmission rank information for a PUSCH associated only with a target SRS resource set is a number of SRS resources in the target SRS resource set, wherein the target SRS resource set is any SRS resource set in the N SRS resource sets;
and/or
determining that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

22. A method for determining an uplink channel transmission rank, comprising:
determining, by a terminal, maximum transmission rank information for a PUSCH, wherein the maximum transmission rank information for the PUSCH comprises:
maximum transmission rank information for a PUSCH associated only with a single SRS resource set configured for the terminal; and
maximum transmission rank information for a PUSCH associated simultaneously with multiple SRS resource sets configured for the terminal.

23. The method according to claim 22, wherein before the determining, by a terminal, maximum transmission rank information for a PUSCH, the method further comprises:
receiving, by the terminal, configuration information of N SRS resource sets sent by a network-side device, wherein the SRS resource sets are SRS resource sets for codebook transmission or non-codebook transmission.

24. The method according to claim 22, wherein
before the determining, by a terminal, maximum transmission rank information for a PUSCH, the method further comprises:
receiving, by the terminal, first configuration information sent by the network-side device, the first configuration information comprising N pieces of maximum transmission rank information, wherein the N pieces of maximum transmission rank information are in one-to-one association with N SRS resource sets corresponding to the terminal, and N is an integer greater than or equal to 2; and
the determining, by a terminal, maximum transmission rank information for a PUSCH comprises:
determining that maximum transmission rank information for a PUSCH associated only with a target SRS resource set is a first value, wherein the first value is a maximum transmission rank configured by the network-side device for the target SRS resource set, and the target SRS resource set is any SRS resource set in the N SRS resource sets;
and/or
determining that maximum transmission rank information for a PUSCH associated simultaneously with M SRS resource sets is a second value or a third value, wherein the second value is the smallest value of maximum transmission ranks configured by the network-side device for the M SRS resource sets, the third value is configured by the network-side device, and M is an integer less than or equal to N.

25. The method according to claim 24, wherein a first SRS resource set in the N SRS resource sets corresponds to a highest maximum transmission rank, and the first SRS resource set is an SRS resource set with the smallest identifier or a first SRS resource set in the N SRS resource sets.

26. The method according to claim 23, wherein the SRS resource set is an SRS resource set for codebook transmission; and
before the determining, by a terminal, maximum transmission rank information for a PUSCH, the method further comprises:
receiving, by the terminal, second configuration information sent by the network-side device, the second configuration information comprising an indicated value for indicating the maximum transmission rank information; and
the determining, by a terminal, maximum transmission rank information for a PUSCH comprises:
determining, by the terminal based on the indicated value and a maximum number of SRS ports of the SRS resource set, the maximum transmission rank information for the PUSCH.

27. The method according to claim 26, wherein the determining, by the terminal based on the indicated value and a maximum number of SRS ports of the SRS resource set, the maximum transmission rank information for the PUSCH comprises:
determining that maximum transmission rank information for a PUSCH associated only with a target SRS resource set is the indicated value or a smaller one of a maximum number of SRS ports of the target SRS resource set and the indicated value, wherein the target SRS resource set is any SRS resource set in the N SRS resource sets;
and/or
determining that maximum transmission rank information for a PUSCH associated simultaneously with M SRS resource sets is a smallest one of the following values: maximum numbers of SRS ports of the M SRS resource sets and the indicated value, or is a smallest value of maximum numbers of SRS ports of each of the SRS resource sets other than an SRS resource set with the smallest identifier and the indicated value, M being an integer less than or equal to N.

28. The method according to claim 23, wherein the SRS resource set is an SRS resource set for non-codebook transmission; and
before the determining, by a terminal, maximum transmission rank information for a PUSCH, the method further comprises:
receiving, by the terminal, third configuration information sent by the network-side device, the third configuration information comprising an indicated value for indicating the maximum transmission rank information; and
the determining, by a terminal, maximum transmission rank information for a PUSCH comprises:
determining, by the terminal based on the indicated value and a number of SRS resources in the SRS resource set, the maximum transmission rank information for the PUSCH.

29. The method according to claim 28, wherein the determining, by the terminal based on the indicated value and a number of SRS resources in the SRS resource set, the maximum transmission rank information for the PUSCH comprises:
determining that maximum transmission rank information for a PUSCH associated only with a target SRS resource set is the indicated value or a smaller one of a number of SRS resources in the target SRS resource set and the indicated value, wherein the target SRS resource set is any SRS resource set in the N SRS resource sets;
and/or
determining that maximum transmission rank information for a PUSCH associated simultaneously with M SRS resource sets is a smallest one of the following values: numbers of SRS resources in the M SRS resource sets and the indicated value, or is a smallest value of numbers of SRS resources in each of the SRS resource sets other than an SRS resource set with the smallest identifier and the indicated value, M being an integer less than or equal to N.

30. The method according to claim 23, wherein the SRS resource set is an SRS resource set for non-codebook transmission; and the determining, by a terminal, maximum transmission rank information for a PUSCH comprises:
determining, by the terminal based on a number of SRS resources in the SRS resource set, the maximum transmission rank information for the PUSCH.

31. The method according to claim 30, wherein determining, by the terminal based on a number of SRS resources in the SRS resource set, the maximum transmission rank information for the PUSCH, comprising:
determining that maximum transmission rank information for a PUSCH associated only with a target SRS resource set is a number of SRS resources in the target SRS resource set, wherein the target SRS resource set is any SRS resource set in the N SRS resource sets;
and/or
determining that maximum transmission rank information for a PUSCH associated simultaneously with M SRS resource sets is a smallest one of the following values: numbers of SRS resources in the M SRS resource sets, or is a smallest value of numbers of SRS resources in each of the SRS resource sets other than an SRS resource set with the smallest identifier, M being an integer less than or equal to N.

32. An apparatus for interpreting downlink control information, comprising:
a first receiving module configured to receive DCI for scheduling a PUSCH; and
a first determining module configured to determine, based on maximum transmission rank information for the PUSCH, a bit length of a target field of the DCI and significant bits in the target field, wherein the target field comprises at least one of the following:
at least one SRI field;
at least one TPMI field; and
a PTRS-DMRS field.

33. An apparatus for determining an uplink channel transmission rank, comprising:
a determining module configured to determine maximum transmission rank information for a PUSCH, wherein the maximum transmission rank information for the PUSCH comprises:
maximum transmission rank information for a PUSCH associated only with a single SRS resource set configured for a terminal; and
maximum transmission rank information for a PUSCH associated simultaneously with multiple SRS resource sets configured for the terminal.

34. A terminal, comprising a processor, a memory, and a program or instructions stored in the memory and capable of running on the processor, wherein when the program or instructions are executed by the processor, the steps of the method according to any one of claims 1 to 21 are implemented; or when the program or instructions are executed by the processor, the steps of the method according to any one of claims 22 to 31 are implemented.

35. A readable storage medium, wherein the readable storage medium has a program or instructions stored thereon, and when the program or instructions are executed by a processor, the steps of the method according to any one of claims 1 to 21 are implemented, or the steps of the method according to any one of claims 22 to 31 are implemented.
